# EUROPÄISCHE PATENTSCHRIFT

(11) **EP 2 386 830 B1**
(45) Veröffentlichungstag und Bekanntmachung des Hinweises auf die Patenterteilung: **02.09.2015**
(21) Anmeldenummer: 11156177.5
(22) Anmeldetag: 28.02.2011
(51) Int. Cl.: G01C 21/34, G08G 1/0968

(54) **Satellitengestütztes Navigationsgerät mit einer Vorrichtung und einem Verfahren zur Anpassung einer berechneten Route an aktuelle Verkehrsereignisse**
Satellite navigation system with a device and method for adjusting a calculated route on the basis of current traffic events
Appareil de navigation assisté par satellite doté d'un dispositif et d'un procédé d'adaptation à une route prédéterminée selon des évènements de circulation

(30) Priorität: 12.05.2010 DE 102010020898
(43) Veröffentlichungstag der Anmeldung: 16.11.2011
(73) Patentinhaber: TechniSat Digital GmbH, 54550 Daun (DE)
(72) Erfinder: Wierschin, Torsten, Dipl.-Inform., 17493 Greifswald (DE); Kolanko, Jan, Dipl.-Inform. (FH), 01157 Dresden (DE); Münzner, Christian, Dipl.-Math., 01309 Dresden (DE)

(56) Entgegenhaltungen:
- EP-A2- 1 944 577
- DE-A1-102004 010 510

## Beschreibung

Die Erfindung betrifft ein satellitengestütztes Navigationsgerät und ein Verfahren zur Anpassung oder Revision einer berechneten Route an eine aktuelle Verkehrslage. Bei der vorliegenden Erfindung unterliegen der Zeitpunkt und die Häufigkeit der Routenanpassung durch Komponenten des satellitengestützten Navigationsgerätes sowie eine Ausgabe einer aktualisierten Route an den Führer eines Kraftfahrzeugs bestimmten Bedingungen.

Es sind verschiedenste Lösungen zur Navigation und Routenberechnung von Fahrzeugen bekannt, die anhand von Kriterien eine optimale Route von einem Startpunkt zu einem benutzerdefinierten Endpunkt berechnen und dem Nutzer zur Zielführung anbieten. Zu den Kriterien zählen beispielsweise vom Nutzer definierte Zwischenziele oder zu vermeidende Straßenarten. Zusätzlich ergeben sich Qualitätskriterien einer Route aus den Kosten der berechneten Route selbst und Verkehrshindernissen, die sich auf der berechneten Route befinden. Zu den Kosten der berechneten Route gehören solche, die sich aus der Fahrzeit und dem Kraftstoffverbrauch ergeben und die benötigt werden, um die berechnete Route zurückzulegen. Besteht auf einer Route von Routenabschnitten ein Verkehrshindernis, wie eine Straßensperrung, ein Stau oder stockender Verkehr, verändern sich die Kosten, da sie nicht nur von der Zeit zum Befahren der Route vom Startpunkt zum Zielpunkt, sondern zusätzlich von der Zeit zum Passieren des Verkehrshindernisses abhängig sind.

Aus der EP0715289 ist ein System bekannt, bei dem Planungsdaten, welche die Start- und die Zielposition eines Fahrzeugs umfassen, an einen externen Rechner einer Verkehrszentrale übertragen werden. Der Rechner der Verkehrszentrale ermittelt unter Beachtung von definierten Randbedingungen und unter Berücksichtigung der aktuellen und/oder prognostizierten Verkehrsmeldungen, Routendaten und sendet diese, meist kostenpflichtig, an das Fahrzeug. Das heißt, die Verwertung von verkehrsbezogener Information findet in einer Verkehrszentrale mit einem zentralen Rechner statt und das Ergebnis, eine berechnete Route, wird an das Fahrzeug übermittelt. Bei diesem System wird beim Eintritt einer geänderten Verkehrssituation, wie dem Auftreten eines Staus, auf einem Streckenabschnitt der vorher ermittelten Fahrtroute sofort, durch den Rechner der Verkehrszentrale, die Fahrtroute neu kalkuliert und eine aktualisierte Route an das Fahrzeug übertragen. Deshalb sendet das Fahrzeug in gewissen zeitlichen Abständen seine aktuelle Position an den Verkehrsrechner, die zum Beispiel über ein globales Navigationssatellitensystem, auch als GPS bekannt, auf WGS-84 Koordinaten basierend, ermittelt wird. Das geodätische Referenzsystem, auch kurz WGS-84, stellt die Grundlage des GPS dar, das die Vermessung der Erde und die Orientierung mittels Satelliten ermöglicht und als einheitliche Grundlage für Positionsangaben auf der Erde und im erdnahen Raum herangezogen wird.

Diese Art der Übertragung von Verkehrsmeldungen, bei der zwischen Verkehrszentrale und Fahrzeug ein ständiger Datenaustausch, wie zum Beispiel über ein Funktelefon, stattfindet, wird durch die zur Verfügung stehende Kapazität der Kommunikationskanäle begrenzt. Zusätzlicher Nachteil dieser Systeme sind die bei der Übermittlung der Verkehrsmeldungen entstehenden Kosten.

Aus der DE19806197 sind ein Verfahren zur Übermittlung von Verkehrsinformationen und eine Vorrichtung zur Durchführung des Verfahrens bekannt. Die Aufgabe der DE19806197 besteht im Gegensatz zur vorliegenden Erfindung darin, die von einer Verkehrszentrale an ein Fahrzeug zu übermittelnde Verkehrsdatenmenge zu verringern. Aus diesem Grund wird um einen bekannten oder von der Verkehrszentrale angenommenen Aufenthaltsort eines Fahrzeugs ein Bezugsgebiet gelegt. Es werden nur Verkehrsinformationen, die dieses Bezugsgebiet betreffen, an das Fahrzeug gesendet und somit wird eine Reduktion der zu übertragenen Verkehrsinformation erreicht.

Aus der DE19516477 ist eine Einrichtung zur Aufbereitung und Ausgabe von Informationen für einen Fahrzeugführer bekannt. Bei dieser Einrichtung, die im Wesentlichen aus einem Empfänger, auch TMC-System genannt, und einem Navigationssystem besteht, soll eine Filterung und Bewertung von empfangener Verkehrsinformation durch das TMC-System erfolgen, um die Aufmerksamkeit des Fahrers nicht zu sehr vom Verkehrsgeschehen abzulenken und die Rechenlast der Einrichtung gering zu halten. Die Einrichtung verbindet ein Verkehrstelematikmodul mit einem bekannten Navigationssystem. Unter Verkehrstelematik ist die Fernübertragung von Verkehrsinformation bezüglich eines Infrastruktursystems, in diesem Fall der Straße, zwischen zwei Kommunikationspartnern, dem Empfänger und dem TMC-System, zu verstehen. Ein zur Übertragung der Verkehrsinformation genutzter Kanal wird als ungestört, stets als bidirektional angenommen. Die Filterung der Verkehrsinformation soll anhand von Selektionskriterien, wie anhand der aktuellen Position des Fahrzeugs entlang der befahrenen Route, vorgenommen werden. Somit ist es notwendig, dass die jeweilige Position an das TMC-System übertragen wird. Nachteilig dabei ist, dass die Übertragung der aktuellen Position im Wesentlichen nach Zurücklegen einer vorgegebenen Entfernung oder nach Ablauf einer vorgegebenen Zeit erfolgen soll, das bedeutet, dass der Empfänger die eingehende Verkehrsinformation nicht zu jedem beliebigen Zeitpunkt anhand der aktuellen Position filtern und dadurch unnötige Routenberechnungen auslösen kann. Zusätzlich ist nachteilig, dass zu jeder eingehenden Verkehrsinformation die Relevanz zur aktuellen Route geprüft und gegebenenfalls eine Alternativroute berechnet wird.

Die Offenlegungsschrift DE102004010510 beschreibt ein Navigationssystem mit einem Empfänger für Verkehrsmeldungen und ein Verfahren zum Übertragen von Verkehrsmeldungen. Das Navigationssystem weist einen Empfänger zum Empfang von Verkehrsmeldungen, einen Speicher zum Ablegen sämtlicher, empfangener Verkehrsmeldungen und einen Arbeitsspeicher zum Speichern von Verkehrsmeldungen, die für das momentan befahrene Gebiet zutreffen, auf. Die im Arbeitsspeicher abgelegten Verkehrsmeldungen sollen bei einer Zielführung berücksichtigt werden. Durch eine zum Speicher der Gesamtheit der empfangenen Verkehrsmeldungen zugehörige Filtereinrichtung wird überprüft, ob eine Verkehrsmeldung zum momentan befahrenen Gebiet des Fahrzeugs gehört. Es werden nur diejenigen Verkehrsmeldungen in den Arbeitsspeicher übertragen, die zu dem Gebiet gehören, das momentan vom Kraftfahrzeug befahren wird. Im Gegensatz zur vorliegenden Erfindung wird somit die Aufgabe gelöst, die Kapazität des Arbeitsspeichers gering zu halten.

Aus der japanischen Patentanmeldung JP07282394 ist eine Zielführungsvorrichtung bekannt, bei der durch Kontrolle von Schwellwerten eine Routenupdatefrequenz und die Arbeitslast des Fahrers reduziert, sowie die Benutzbarkeit des Systems verbessert werden sollen. Das bedeutet, dass die Entscheidung über einen Routenwechsel durch Schwellwertregeln gesteuert wird. Ein Kurs wird als eine Menge von Routen zum Ziel betrachtet und bei Auftreten eines Verkehrshindernisses soll aus dem Kurs eine neue ausgewählt werden. Die Routenupdatefrequenz ist die Anzahl von Routenwechseln bezüglich einer Referenzzeit. Die Referenzzeit ist die Zeit, die seit dem letzten Routenwechsel vergangen ist. Das ist ein Nachteil, da weder die tatsächlich gemessene Zeit noch die vergangene Routenabfahrzeit seit dem letzten Routenwechsel eine unterscheidende Bewertung der Anzahl der vorgenommenen Routenwechsel in den gegensätzlichen Anwendungsszenarien Stau und freier Verkehrsfluss erlauben. Bei der Betrachtung der Schwellwerte ist nachteilig, dass kein Bezug zum aktuellen Verkehrsnetz, beispielsweise einem nächstmöglichen Abfahrpunkt von der aktuellen Route, hergestellt wird.

Aus der EP 1 944 577 A2 ist ein Verfahren und eine Vorrichtung zum Navigieren eines Fahrzeugs bekannt, bei dem eine verkehrsrelevante Nachricht in einem Nachrichtenspeicher nur dann gespeichert wird, wenn die verkehrsrelevante Nachricht in Abhängigkeit von der aktuellen Position des Fahrzeugs entweder ein vorgegebenes geographisches Gebiet oder eine aktuell vorgegebene Route betrifft.

Die bekannten Navigationssysteme nutzen für die Routenberechnung allgemein zugängliche Verkehrsinformation über ein Rundfunkübertragungssystem, wie den Verkehrsnachrichtenkanal, den sogenannten Traffic Message Channel auch TMC, TMC-Pro, Satelliten Radio auch als XM-Radio bekannt, HD-Verkehrsrundfunk oder Digital Rundfunk. Bei diesen Systemen wird Information hinsichtlich Verkehrsbeeinträchtigungen mit dem Audiosignal gesendet und von einem entsprechenden Empfänger, der mit dem Navigationssystem verbunden ist, empfangen. Die empfangene Verkehrsinformation wird bei der Berechnung einer Route von einer Startposition zu einer Zielposition und zur Aktualisierung der momentan befahrenen Route berücksichtigt. Der Nachteil dieser Systeme ist, dass sofort, wenn sich die Verkehrssituation auf der benutzten Fahrtroute oder einem Routenabschnitt ändert, eine Neuberechnung der Route durch das Navigationssystem ausgelöst wird und die Ausgabe einer neuen Fahrtroute erfolgt. Die Neuberechnung und Ausgabe von Alternativrouten kann in Zeiten mit hohem Verkehrsaufkommen, wie zu Urlaubsbeginn, besonders häufig auftreten. Der Führer eines Fahrzeugs kann durch die ständige Ausgabe von empfangenen Verkehrsmeldungen, dem wiederholten Vorschlagen von Routenänderungen, vom aktuellen Verkehrsgeschehen abgelenkt werden.

Die Routenänderungen können unter Umständen auch Empfehlungen für das Abfahren von der aktuellen Fahrtroute sowie für das spätere Zurückkehren auf diese beinhalten, was für den Fahrer besonders irritierend ist.

Die Aufgabe der vorliegenden Erfindung besteht darin, eine Vorrichtung und ein Verfahren zur Zielführung mit einem satellitengestützten Navigationsgerät zur Verfügung zu stellen, das einem Nutzer ermöglicht, ein Reiseziel sicher, bequem, stressfrei und in ressourcenschonender Weise zu erreichen und Ablenkungen, beispielsweise beim Führen eines Kraftfahrzeugs, zu verringern sowie Mittel bereitzustellen, die es ermöglichen Rundfunkempfangsmittel, die mit dem Navigationsgerät verbunden sind, zu steuern.

Zur Lösung der benannten Aufgabe geht die vorliegende Erfindung von einem satellitengestützten Navigationsgerät zur dynamischen Zielführung aus, welches mithilfe von über Hörrundfunk empfangenen Verkehrsmeldungen eine Routenberechnung durchführt und eine berechnete Route entsprechend empfangener Information zu Verkehrsereignissen aktualisiert und anpasst. Ein wesentlicher Vorteil der vorliegenden Erfindung besteht darin, dass das Navigationsgerät zur Routenberechnung und Anpassung keine Verbindung oder Rückkopplung zu einer Verkehrszentrale benötigt. Bei dieser Art von Geräten, den sogenannten Onboard-Systemen, findet der Empfang von Verkehrsmeldungen mithilfe von Übertragungskanälen statt. Diese Übertragungskanäle unterliegen Störungen, es kann zur Störung der Übertragung selbst kommen, beispielsweise bei einer Durchfahrt durch einen Tunnel, oder bei der Übertragung kann Information verloren gehen.

Das Onboard- System führt die Routenberechnung und die Routenanpassung an das aktuelle Verkehrsgeschehen selbstständig mit internen Komponenten durch. Zu internen Komponenten zählen beispielsweise ein GPS-basiertes Lage- und Positionsschätzmodul, Rundfunkempfangsmittel, eine Georeferenz-Datenbank als Speichermittel, die aktuelles Kartenmaterial gespeichert hat, ein Routenkalkulationsmodul, weitere Speichermittel zum Speichern von aktuellen Verkehrsmeldungen in einem Meldungspool.

In der Georeferenz-Datenbank ist die Struktur des Verkehrsnetzes durch Daten zu Straßenabschnitten nachgebildet, wobei jeder Abschnitt von einem anderen aus erreichbar ist. Da sich Straßenabschnitte des Verkehrsnetzes, beispielsweise durch Erweiterungen ändern können, müssen die Daten zum Verkehrsnetz in der Georeferenz-Datenbank aktualisiert werden.

Ein Straßenabschnitt verbindet zwei Punkte, die WGS-84 Koordinaten. Jeder Straßenabschnitt verursacht Kosten, die durch das Passieren des betroffenen Abschnittes entstehen, die Kosten werden in einer Zeiteinheit, beispielsweise in Sekunden, angegeben und sind ebenfalls in der Georeferenz-Datenbank hinterlegt.

Die Rundfunkempfangsmittel, auch als Tuner bekannt, besitzen Kapazität zum Empfangen von Hörfunksignalen und Verkehrsmeldungen, beispielsweise über RDS-TMC empfangen, sowie zum Bereitstellen und Aktualisieren einer Liste mit empfangbaren Sendern. Diese Verkehrsmeldungen umfassen Verkehrsprognosen sowie Information zu Verkehrsereignissen, wie eine eingeschränkte Verkehrsführung, beispielsweise das Befahren von Verkehrszonen zu bestimmten Zeiten oder durch bestimmte Fahrzeugtypen. Das Radio Data System, auch als RDS bekannt, ermöglicht die Übermittlung von Zusatzinformationen beim Hörfunk. Die Rundfunkempfangsmittel, im Weiteren kurz Empfangsmittel genannt, müssen ebenfalls die Qualität eines eingestellten Hörfunksenders sicherstellen, dazu wechseln sie automatisch die Frequenz und folgen somit einem einmal eingestellten Sender. Das erspart dem Nutzer das manuelle Suchen nach der neuen Frequenz, wenn das Fahrzeug auf seiner Route den Sendebereich des eingestellten Senders verlässt. Zusätzlich halten die Empfangsmittel die bereitgestellte Senderliste aktuell. Durch den Empfang von Verkehrsmeldungen ermöglichen die Empfangsmittel eine Routenberechnung und die Routenanpassung an die aktuelle Verkehrssituation. Die höchste Priorität der Empfangsmittel liegt im Normalfall darauf eine gleichbleibende Qualität des eingestellten Senders, somit eines empfangenen und ausgegebenen Hörfunkprogramms, sicher zu stellen. Zu diesem Zweck sind bestimmte Empfangskomponenten redundant ausgelegt. Wenn die Qualität eines eingestellten Programmes sinkt und gleichzeitig eine angespannte Verkehrslage herrscht, was sich im verstärkten Empfang von Verkehrsmeldungen niederschlägt, werden die Empfangsmittel zuerst die Qualität des eingestellten Programmes gewährleisten und danach empfangene Verkehrsinformation weiterleiten.

Ein Informationsverwaltungsmodul, das mit dem Navigationsgerät verbunden ist, verwaltet die empfangenen Meldungen mit Verkehrsinformation, die Verkehrsereignisse oder Verkehrshindernisse beinhaltet, und überträgt sie an den Meldungspool.

Die Gültigkeit von Verkehrsinformation und ihre Anwesenheit als Meldung im RDS-TMC Strom wird beispielsweise in der ISO14819, dem internationalen Standard über den Empfang von Verkehrsmeldungen, geregelt. Die empfangene Verkehrsmeldung, die als Datensatz vorliegt, wird durch ihre Struktur und den Inhalt des Datensatzes charakterisiert.

Geht eine Verkehrsmeldung wegen schlechter Empfangsqualität, mangelnder Empfangsfeldstärke oder Mehrwegeempfang wiederholt verloren, muss die Verkehrsmeldung aus dem gültigen Meldungspool entfernt werden, beispielsweise bei Durchfahrt durch einen Tunnel hervorgerufen. Dieser Ablauf weicht von der tatsächlichen Verkehrssituation und den über RDS-TMC gemeldeten Verkehrshindernissen ab.

Ändern sich diese Randbedingungen, beispielsweise, wenn das Fahrzeug den Tunnel verlässt, die Empfangsqualität des RDS-TMC Senders wieder besser wird, wie beim Verlassen eines Empfangsschattens, erscheint die betroffene TMC-Meldung oder die betroffenen TMC-Meldungen erneut im RDS-TMC Strom und müssen wieder in den Meldungspool aufgenommen werden.

Dieser für Onboard-Systeme typische Vorgang führt in herkömmlichen Navigationssystemen meist zur akustischen und visuellen Ausgabe von Empfehlungen bezüglich Routenwechseln mit häufigen Zielführungsangaben, die auch widersprüchlich sein können, beispielsweise wie Aufforderungen die aktuell befahrene Autobahn zu verlassen oder wieder auf die Autobahn zurückzukehren.

Der Empfang und die Anwesenheit einer Verkehrsmeldung im RDS-TMC-Strom ist eine Zufallsgröße, die einer unbekannten Wahrscheinlichkeitsverteilung folgt. Aus diesem Grund wird bei der vorliegenden Erfindung eine zeitliche und räumliche Filterung dieser Zufallsgröße vorgenommen.

Die Nutzung von Meldungspool und einem Pufferpool bringt den Vorteil, dass auch bei Störung der Übertragungskanäle Verkehrsmeldungen zur Überprüfung und Anpassung oder Revision einer berechneten, aktuellen Route zur Verfügung stehen.

Ein wesentliches Merkmal gemäß der vorliegenden Erfindung besteht darin, dass zwischen Meldungspool und Pufferpool eine Datenverbindung besteht, welche mithilfe einer Datenmanagementeinrichtung, im weiteren Datenmanager genannt, eine besondere Datenübertragung zwischen Meldungspool und Pufferpool stattfindet.

Ein weiteres Merkmal der Erfindung besteht darin, dass der Datenmanager in Abhängigkeit von der Anzahl der empfangenen Verkehrsmeldungen,
- das aktuelle Verkehrsaufkommen im Bereich um das Navigationsgerät analysiert und bestimmt,
- die empfangenen Verkehrsmeldungen gefiltert und bewertet vom Meldungspool in den Pufferpool überträgt,
- die Aktualisierungen des Pufferpools derart vornimmt, dass die zeitlichen Abstände zwischen den Aktualisierungen variieren und
- die Empfangsmittel zum Empfangen von Hörfunksignalen sowie Verkehrsmeldungen und den Routenkalkulator steuert.

Im Rahmen der vorliegenden Erfindung wird unter dem aktuellen Verkehrsaufkommen dasjenige verstanden, welches vom Datenmanager mithilfe der Anzahl der vom Meldungspool in den Pufferpool übertragenen Verkehrsmeldungen bestimmt wird. Die Bestimmung des Verkehrsaufkommens wird vom Datenmanager während der Zielführung und Routenaktualisierung mehrfach, in geräteintern festgelegten zeitlichen Abständen, durchgeführt, da sich die Anzahl der gemeldeten Verkehrsmeldungen ändert.

Bei der Bestimmung des Verkehrsaufkommens betrachtet der Datenmanager die empfangenen Verkehrsmeldungen, die ein neues Verkehrsereignis, ein bereits empfangenes Verkehrsereignis, dessen Eigenschaften sich verändert haben, oder die den Wegfall eines bereits empfangenen Verkehrsereignisses betreffen, sofern diese durch ihre Position für die berechnete Route relevant sind. Die so ermittelte Anzahl der Verkehrsmeldungen wird vom Datenmanager als Indikator für das aktuelle Verkehrsaufkommen um das Navigationsgerät betrachtet. Änderungen, welche die Eigenschaften von einem Verkehrshindernis oder Verkehrsereignis betreffen, können beispielsweise die Länge eines Staus sein, zu dem bereits eine Meldung mit Verkehrsinformation empfangen wurde, aber dessen Länge sich verändert hat. Das aktuelle Verkehrsaufkommen wird vom Datenmanager als steigend betrachtet, je mehr relevante neue Verkehrsmeldungen und Änderungen von Verkehrsmeldungen empfangen oder Löschungen von Verkehrsmeldungen registriert werden. Entsprechend der vorliegenden Erfindung wird angenommen, dass die Anzahl der empfangenen, an den Pufferpool übertragenen und gespeicherten Verkehrsmeldungen das aktuelle Verkehrsaufkommen widerspiegelt.

Entsprechend der vorliegenden Erfindung nimmt der Datenmanager eine Filterung der empfangenen Verkehrsmeldungen derart vor, dass er die Entfernung des Verkehrshindernisses einer empfangenen Verkehrsmeldung zur aktuellen Position und unter Betrachtung des aktuellen Verkehrsnetzes des Navigationsgerätes räumlich bestimmt und anhand dieser Entfernung die Verkehrsmeldung bezüglich der Konsequenz zur Verkehrsdichte und Positionsnähe gewichtet in den Pufferpool überträgt.

Der Datenmanager nimmt die Bewertung der empfangenen Verkehrsmeldungen, die Verkehrshindernisse betreffen, derart vor, dass er sie nach ihrer Art, ihren Eigenschaften unterscheidet und entsprechend ihrer Position zum aktuellen Standort des Navigationsgerätes unter Berücksichtigung des aktuellen Verkehrsnetzes betrachtet und im Pufferpool speichert. Verkehrshindernisse sind zum Beispiel zäh fließender oder stockender Verkehr, Staus und Sperrungen von Routenabschnitten. Der Datenmanager berücksichtigt zusätzlich zur Position des Verkehrshindernisses zur Verkehrsmeldung gehörende Information, die beispielsweise den Zeitpunkt eines Meldungseingangs betrifft und im Zusammenhang mit dem Verkehrshindernis entstehende Zusatzkosten. Ein Verkehrsereignis, wie beispielsweise eine Vollsperrung, verursacht höhere Zusatzkosten als ein Stau, die entsprechend der vorliegenden Erfindung in Zeiteinheiten ausgedrückt werden.

Der zeitliche Abstand von Aktualisierungen des Pufferpools hängt in einer speziellen Ausführungsform der vorliegenden Erfindung vom aktuellen Verkehrsaufkommen und der Entfernung zu einem relevanten Verkehrshindernis ab und variiert. Ein Verkehrsereignis ist relevant, wenn es auf der gewählten Route liegt oder zu einem betrachteten Verkehrsbereich gehört. Das bedeutet, vom Datenmanager werden die Höhe des Verkehrsaufkommens und die Entfernung des Navigationsgerätes zu einem relevanten Verkehrsereignis zur Bestimmung des zeitlichen Abstandes zwischen Aktualisierungen des Pufferpools betrachtet. Der Datenmanager unterscheidet entsprechend der Anzahl empfangener relevanter Verkehrsmeldungen zwischen einem ruhigen, durchschnittlichen und hohen Verkehrsaufkommen. Der Datenmanager geht von einer Verkehrslage mit einem hohen Verkehrsaufkommen aus, wenn beispielsweise mehr als zwanzig relevante Verkehrsmeldungen von den Empfangsmitteln empfangen werden. Entsprechend dieser Anzahl von Verkehrsmeldungen setzt der Datenmanager die Zeit bis zur nächsten Aktualisierung des Pufferpools beispielsweise auf fünf Minuten. Ist die Anzahl der empfangenen relevanten Verkehrsmeldungen kleiner als zwanzig, wird der zeitliche Abstand bis zur nächsten Aktualisierung des Pufferpools zum Beispiel auf vier Minuten gesetzt. Somit wird bei sinkendem Verkehrsaufkommen der Pufferpool öfter aktualisiert als bei steigendem oder hohem Verkehrsaufkommen. Bei der vorliegenden Erfindung wird davon ausgegangen, dass sich Verkehrshindernisse, zu denen Informationen mit den Verkehrsmeldungen übertragen werden auflösen oder sich in ihren Eigenschaften ändern können. Somit realisiert der Datenmanager eine dynamische Steuerung der zeitlichen Aktualisierung des Pufferpools, da er eine Integration seines bewerteten Inhalts über die Zeit vornimmt. Dadurch, dass bei hohem Verkehrsaufkommen der Pufferpool seltener aktualisiert wird, kommt es zu einer scheinbaren Beruhigung der Verkehrssituation um das Navigationsgerät, daraus kann resultieren, dass weniger Routenaktualisierungen vom Datenmanager angestoßen werden.

In der Zeit zwischen den Aktualisierungen wird keine gefilterte, bewertete Verkehrsmeldung in den Pufferpool übertragen. Erst nach Ablauf der Zeit übergibt der Datenmanager Pakete von bewerteter, gewichteter Information entsprechend empfangener Verkehrsmeldungen an den Pufferpool. Diese Vorgehensweise dient dazu, eine scheinbare Beruhigung der aktuellen Verkehrssituation zu erreichen und die Anzahl der Routenaktualisierungen zu verringern, da sich im zeitlichen Abstand bis zur nächsten Aktualisierung des Pufferpools Verkehrsmeldungen kompensieren können.

Ein anderes Merkmal der Erfindung besteht darin, dass der Datenmanager bei einer Festlegung der zeitlichen Abstände zwischen den Aktualisierungen des Pufferpools berücksichtigt, ob die berechnete Route durch einen Bereich des Verkehrsnetzes wie dem Ruhrgebiet führt, das generell durch eine hohe Anzahl von Verkehrsmeldungen charakterisiert ist. In diesem Fall kann der Datenmanager eine höhere Anzahl von gemeldeten Verkehrsmeldungen zulassen, bevor er die zeitlichen Abstände zwischen den Aktualisierungen des Pufferpools vergrößert.

Ein weiteres Merkmal der vorliegenden Erfindung besteht darin, dass der Datenmanager nach Bestimmung der Höhe des aktuellen Verkehrsaufkommens die Empfangsmittel mit Kapazität zum Empfangen von Hörfunksignalen, Verkehrsmeldungen sowie zum Bereitstellen und Aktualisieren einer Liste mit empfangbaren Sendern derart steuert, dass bei steigendem oder hohem Verkehrsaufkommen die Empfangsmittel ihre Empfangskapazität vorwiegend zum Empfang der Verkehrsmeldungen nutzen.

Gemäß einem weiteren Merkmal der Erfindung wird zur Initiierung einer ersten Überprüfung und Anpassung der aktuellen Route an aktuelle Verkehrsmeldungen durch den Datenmanager das Verhältnis der Kosten eines Routenabschnittes der aktuellen Route ohne Verkehrshindernis zu den Gesamtkosten des Routenabschnittes betrachtet. Alle weiteren Überprüfungen hängen von der Änderung der Eigenschaften der Verkehrsmeldungen auf der aktualisierten Route und den Verkehrsmeldungen in der Umgebung des Navigationsgerätes ab, wobei bei den Letzteren nur die Meldungen betrachtet werden, die bei der Routensuche benutzt wurden. Diese gemeldeten Verkehrshindernisse müssen nicht zwingend auf der aktualisierten bzw. auf der ursprünglichen Route liegen bzw. gelegen haben.

Unter Überprüfung im Sinne dieser Erfindung wird verstanden, dass durch den Datenmanager eine Bewertung der aktuellen Route und der Fahrzeugumgebung hinsichtlich einer gewichteten und bewerteten Verkehrsmeldung vorgenommen wird, der Routenkalkulator nach einer Alternativroute sucht und deren Kosten berechnet. Durch die Routenüberprüfung wird die laufende Zielführung nicht unterbrochen, sie läuft im Hintergrund ab. Nicht jede aktualisierte Route wird dem Nutzer angezeigt. Eine aktualisierte Route wird dem Nutzer des Navigationsgeräts nur dann ausgegeben, wenn diese eine signifikant geänderte Qualität besitzt. Die Qualität der aktualisierten Route ergibt sich beispielsweise aus einer Änderung der Fahrzeit und der damit verbundenen Kosten, oder aus dem Kraftstoffverbrauch. Die Gesamtkosten einer Route werden aus der Summe der Kosten des Routenabschnittes ohne Berücksichtigung von einem gemeldeten Verkehrsereignis und den Kosten des Routenabschnittes mit Verkehrsereignis ermittelt. Übersteigt das Verhältnis einen systemintern definierten Wert, erfolgt eine Neuberechnung der Route. Dadurch wird verhindert, dass der Routenkalkulator ständig nach Alternativrouten sucht. Die Systemleistung des Navigationsgerätes wird somit vorteilhaft verbessert. Für die Verkehrsmeldung, die ein Ereignis betrifft, das keinen wesentlichen Einfluss auf die Kosten hat, unterbleibt die Suche nach einer neu alternativen Route.

Wurde eine aktualisierte Route durch den Routenkalkulator berechnet, wird im Anschluss an die Berechnung anhand der Kostenänderung der revidierten Route gegenüber der ursprünglichen durch den Datenmanager entschieden, ob dem Nutzer ein Wechsel zur aktualisierten Route vorzuschlagen ist. Da nicht jede Routenalternative dem Nutzer des Navigationsgerätes angeboten wird, sinkt die Anzahl der Ablenkungen und der Fahrkomfort des Nutzers steigt.

Gemäß der vorliegenden Erfindung wird vom Datenmanager zur Verbesserung der Zielführungsqualität durch das Navigationsgerät zusätzlich zu den vorher genannten zeitlichen und räumlichen Filtermöglichkeiten ein Zurückklapphorizont betrachtet.

Der Zurückklapphorizont dient dazu, ein Pendeln zwischen zwei berechneten und dem Nutzer ausgegebenen Routenalternativen zu vermeiden oder zu minimieren, um den Nutzer des Navigationsgerätes durch wiederholte Routenwechsel nicht zu irritieren. Der Zurückklapphorizont kann beispielsweise eine Zeitspanne sein, bei einem Anwendungsszenario Stau oder eine berechnete Position speziell im Anwendungsszenario freier Verkehrsfluss bis zu deren Erreichen keine Routenneukalkulation durchgeführt wird. Eine Kombination aus beiden Ansätzen bei der Änderung der aktuellen Verkehrslage in der Umgebung des Fahrzeugs ist ebenfalls möglich.

Abweichend von der vorher beschriebenen Vorgehensweise initialisiert der Datenmanager die Berechnung einer Alternativroute ohne Betrachtung des Zurückklapphorizontes, wenn
- die Meldung zu einem Verkehrshindernis empfangen wurde, welches hohe Kosten verursacht, wie ein Stau mit mehreren Kilometern Länge, noch nicht im Pufferpool gespeichert ist und das sich auf der aktuell befahrenen Route befindet,
- wenn sich die Eigenschaften eines Verkehrsereignisses auf der aktuellen Route entsprechend einer Verkehrsmeldung wesentlich geändert haben, beispielsweise aus stockendem Verkehr ein Stau mit mehreren Kilometern Länge geworden ist,
- wenn sich das Fahrzeug auf einer hindernisfreien Alternativroute bewegt, sich die Kosten des Verkehrshindernisses, die den Wechsel auf diese Route erzwungen haben verringern, kann eine weitere Alternativroute berechnet werden. Diese Alternativroute kann die ursprüngliche Route sein, auf die an einem, in Fahrtrichtung liegenden, vorausberechneten Abfahrpunkt zurückgekehrt wird,
- die Bewegung des Navigationsgerätes aufgrund von Pausenzeiten oder der Unterschätzung von tatsächlichen Kosten für das Befahren eines Routenabschnitts mit einem Verkehrshindernis das Erreichen des Zurückklapphorizonts, durch einen systemintern festgelegten Schwellwert festgelegt, verhindert.

Diese Ausnahmen dienen dazu, dass Verkehrsmeldungen, welche die aktuelle Route betreffen, unverzüglich vom Navigationsgerät berücksichtigt werden.

Der Zurückklapphorizont wird auf der Basis des aktuellen Verkehrsnetzes berücksichtigt, wenn
- ein ehemals auf der Route liegendes Verkehrshindernis seine Kosten verringert oder entfällt,
- ein Verkehrsereignis seine Kosten verringert oder entfällt, das bei der letzten Routenüberprüfung und Routenaktualisierung berücksichtigt wurde,
- das Fahrzeug in einen von mehreren systemintern festgelegten geografischen Kreisen um ein Verkehrshindernis, das bei der letzten Routenüberprüfung verwendet wurde, einfährt.

Verkehrshindernisse, die bei der letzten Routenüberprüfung verwendet wurden, müssen nicht zwingend jemals auf der geführten Route gelegen haben. Eine Routenüberprüfung kann auch dadurch verursacht werden, wenn beispielsweise das Fahrzeug die vom Zielführungssystem angebotene Route verlässt.

Im Gegensatz zum technischen Hintergrund wird bei der vorliegenden Erfindung beim Befahren einer Route immer der nächstmögliche Abzweigpunkt, in Abhängigkeit vom aktuellen, in den Kartendaten gespeicherten Verkehrsnetz, der aktuellen Route voraus berechnet.

Die vorliegende Erfindung soll nachstehend anhand von Figuren beschrieben werden. Die Figuren zeigen im Einzelnen:
Figur 1: eine schematische Darstellung des Aufbaus des Navigationsgerätes,
Figur 2: ein schematisches Funktionsdiagramm einer Routenüberprüfung nach Start des Navigationsgerätes ohne gespeicherte Verkehrsmeldungen und in
Figur 3: ein schematisches Funktionsdiagramm einer Routenüberprüfung nach Start des Navigationsgerätes ohne gespeicherte Verkehrsmeldungen bei Betrachtung der Kosten und Qualitätsänderung einer revidierten Route.

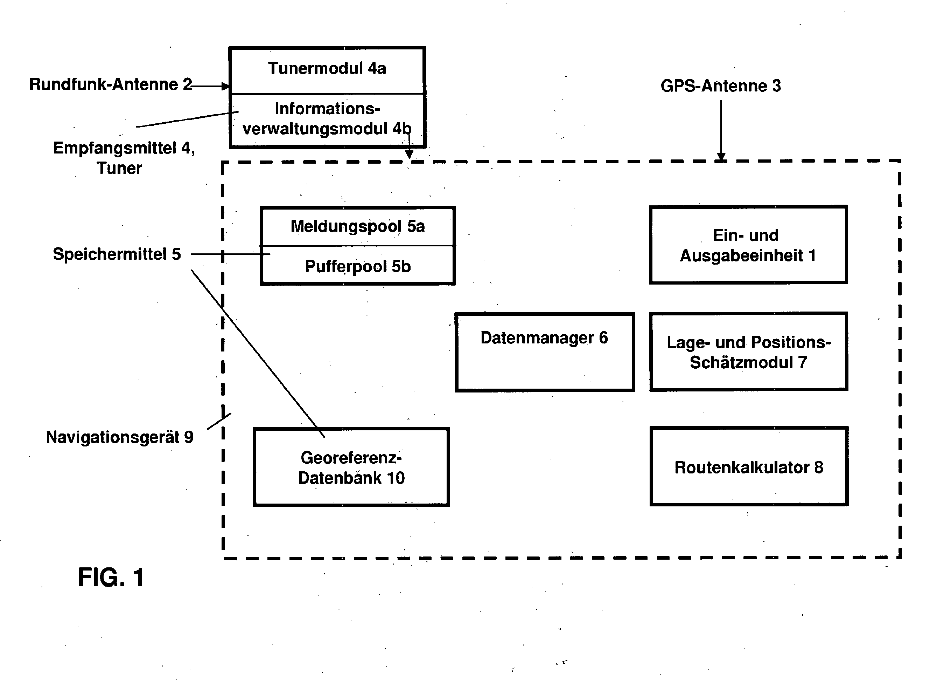

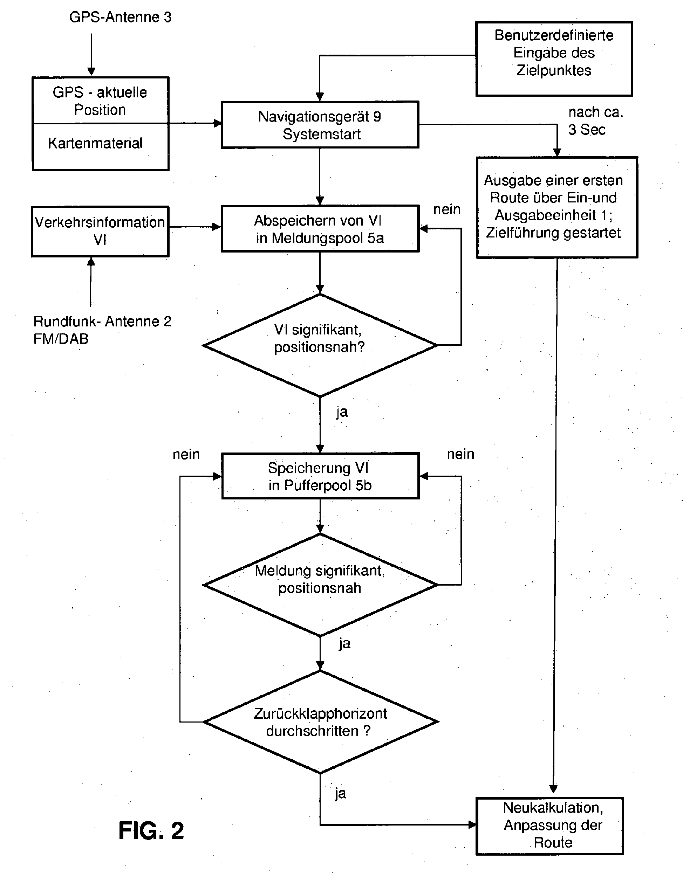

Entsprechend Figur 1 und Figur 2 wird nach Eingabe eines Zielpunktes durch den Nutzer, an der Ein- und Ausgabeeinheit 1, automatisch durch den Routenkalkulator 8 eine erste Teilroute von der aktuellen Position zum Zielpunkt bestimmt und von der Ein- und Ausgabeeinheit 1 ausgegeben. Die Ein- und Ausgabeeinheit 1 ist mit dem Navigationsgerät 9 verbunden. Der Routenkalkulator 8 nutzt zur Routenkalkulation die vom Lage- und Positionsschätzmodul 7 bestimmte Position und das in der Georeferenz-Datenbank 10 gespeicherte Kartenmaterial. Das Lage- und Positionsschätzmodul 7 bestimmt die aktuelle Position des Navigationsgerätes 9 mithilfe der über die GPS-Antenne 3 empfangenen Daten. Die GPS-Antenne 3 ist mit dem Navigationsgerät 9 verbunden.

Parallel zur Bestimmung und Ausgabe der ersten Route empfängt eine Rundfunk-Antenne 2 des Navigationsgerätes 9, die in Verbindung mit den Empfangsmitteln 4 steht, einen Rundfunkdienst, der in seinem unhörbaren Bereich Verkehrsmeldungen beinhaltet. Diese Verkehrsmeldungen beziehen sich auf Verkehrshindernisse, die im Empfangsbereich der Empfangsmittel 4 liegen und somit im Zusammenhang mit der Position des Navigationsgerätes 9 stehen, sie sind jedoch keiner bestimmten Route zugeordnet. Ein Tunermodul 4a der Empfangsmittel 4 nimmt die Verkehrsmeldungen, beispielsweise über den Verkehrsnachrichtenkanal empfangen auf und das Informationsverwaltungsmodul 4b der Empfangsmittel 4 übergibt die empfangenen Verkehrsmeldungen entsprechend ISO 14819 an Speichermittel 5, hier an den Meldungspool 5a, der die Gesamtheit der empfangenen Verkehrsmeldungen speichert. Der Datenmanager 6 prüft, ob sich die Position eines aktuellen Verkehrshindernisses, zu dem eine Meldung empfangen wurde, in einem Bereich von beispielsweise 200 km um die aktuelle Position des Navigationsgerätes 9 befindet. Bezieht sich die Meldung zum Verkehrsereignis, auf eine Position größer 200 km, wird diese Meldung vom Datenmanager 6 nicht in den Pufferpool 5b übertragen, somit räumlich gefiltert und steht momentan nicht zur Routenkalkulation zur Verfügung. Der Pufferpool 5b entsprechend Figur 1 stellt ebenfalls ein Speichermittel 5 dar. Alle anderen Meldungen, deren Positionen sich innerhalb des Bereiches, von beispielsweise 200 km befinden, werden vom Datenmanager 6 nach ihrer Art, ihren Eigenschaften gewichtet und unter Berücksichtigung ihrer Position zum aktuellen Standort des Navigationsgerätes 9 und der aktuellen Verkehrssituation in den Pufferpool 5b übertragen.

Befindet sich im Pufferpool 5b eine Verkehrsmeldung, die ein Verkehrshindernis beschreibt, das sich auf die aktuell berechnete und befahrene Route bezieht, prüft und vergleicht der Datenmanager 6 die Höhe der durch das Ereignis verursachten Zusatzkosten mit den Kosten der aktuellen Route. Übersteigt das Ergebnis einen systemintern festgelegten Schwellwert der Kosten, wird eine Anpassung der aktuellen Route vom Datenmanager 6 initiiert. Danach sucht der Routenkalkulator 8 mithilfe der durch das Lage- und Positionsschätzmodul 7 ermittelten aktuellen Position des Navigationsgerätes 9 und den vorhandenen Kartendaten nach einer Alternativroute. Diese Alternativroute wird dem Nutzer über die Ein- und Ausgabeeinheit 1 des Navigationsgerätes 9 nur dann ausgegeben, wenn sie im Vergleich zur aktuell befahrenen Route eine neue Qualität, beispielsweise hinsichtlich der Fahrzeit, besitzt.

Während der aktuellen Zielführung und der Überprüfung der Route ermittelt der Datenmanager 6 anhand der Anzahl der vom Meldungspool 5a in den Pufferpool 5b zu übertragenden Verkehrsmeldungen die Höhe des aktuellen Verkehrsaufkommens um das Navigationsgerät 9. Aus der Anzahl von gemeldeter und empfangener Verkehrsinformation hinsichtlich Verkehrshindernissen passt der Datenmanager 6 den zeitlichen Abstand bis zur nächsten Aktualisierung des Pufferpools 5b an.

Der Datenmanager 6 unterscheidet entsprechend der Anzahl empfangener relevanter Verkehrsmeldungen zwischen einem ruhigen, durchschnittlichen und hohen Verkehrsaufkommen. Der Datenmanager 6 betrachtet die Höhe des Verkehrsaufkommens auf der Basis der Anzahl der durch die Empfangsmittel 4 empfangenen relevanten Verkehrsmeldungen als normal, bei gleich oder weniger als zehn Verkehrsmeldungen.

Liegt die Anzahl der Verkehrsmeldungen beispielsweise in einem Bereich zwischen zehn und zwanzig Verkehrsmeldungen, wird vom Datenmanager 6 das Verkehrsaufkommen als durchschnittlich betrachtet. Bei mehr als zwanzig Verkehrsmeldungen wird das Verkehrsaufkommen als stark eingestuft. Der Abstand zwischen den Aktualisierungen des Pufferpools 5b wird vom Datenmanager entsprechend des Verkehrsaufkommens angepasst, er variiert somit. Je höher das Verkehrsaufkommen, desto länger werden die zeitlichen Abstände zwischen den Aktualisierungen des Pufferpools 5b.

Haben die Empfangsmittel 4 beispielsweise mehr als zwanzig Meldungen mit Verkehrsinformation empfangen, welche relevant sind und die der Datenmanager 6 bei der Aktualisierung vom Meldungspool 5a an den Pufferpool 5b übertragen bzw. kopiert hat, beträgt der zeitliche Abstand bis zur nächsten Aktualisierung des Pufferpools beispielsweise fünf Minuten.

In den zwanzig Meldungen kann Verkehrsinformation bezüglich Verkehrshindernissen enthalten sein, die
- noch nicht gemeldet wurden, somit neu aufgetreten sind,
- deren Eigenschaften sich verändert haben, oder
- die sich aufgelöst haben.

Zusätzlich betrachtet der Datenmanager 6 die Annäherung des Navigationsgerätes 9 an ein Verkehrshindernis als Meldung, die bei der Bestimmung der Höhe des Verkehrsaufkommens berücksichtigt wird. Befindet sich in diesem Fall das Navigationsgerät 9 in einer Entfernung von mehr als fünfzig Kilometer zu einem Verkehrshindernis, beträgt die Zeitspanne bis zur nächsten Aktualisierung des Pufferpools 5b im vorliegenden Beispiel sieben Minuten.

Der Datenmanager 6 berücksichtigt die Position der Verkehrshindernisse zum Navigationsgerät 9 und ordnet sie entsprechend dieser Position einem Nahbereich oder einem Fernbereich zu. Auch entsprechend dieser Bereiche passt der Datenmanager 6 den zeitlichen Abstand der Aktualisierungen des Pufferpools 5b an, im Nahbereich und Fernbereich ist er unterschiedlich, weil bei der vorliegenden Erfindung davon ausgegangen wird, dass sich Verkehrsmeldungen in einer größeren Entfernung zum Navigationsgerät 9 bis zur Annäherung an das entsprechende Verkehrshindernis aufheben können.

Bei weniger als fünfzig Kilometer Abstand zu einem Verkehrshindernis und mehr als zwanzig relevanten Verkehrsmeldungen beträgt der Abstand bis zur nächsten Aktualisierung beispielsweise fünf Minuten.

Wird vom Datenmanager 6, bei einer Aktualisierung des Pufferpools 5b, eine Verkehrsmeldung vom Meldungspool 5a übertragen, die ein schwerwiegendes Verkehrshindernis betrifft, durch das sich die Kosten des Routenabschnittes erheblich vergrößern und das relevant ist, da es auf der aktuell befahrenen Route liegt, überprüft der Datenmanager 6, ob vor Meldungseingang ein erfolgreicher Routenwechsel stattgefunden hat und ob der Zurückklapphorizont, der durch den Datenmanager 6 bestimmt wird, bereits überschritten wurde. Ist das nicht der Fall, löst der Datenmanager 6 keine Routenüberprüfung entsprechend Figur 2 aus. Wurde der Zurückklapphorizont durchschritten, wird eine Neuanpassung der Route durchgeführt und beispielsweise über die Ein-und Ausgabeeinheit 1 ausgegeben. Auch bei dieser Überprüfung berücksichtigt der Datenmanager 6 das Verkehrsnetz, welches in den gespeicherten Kartendaten der Georeferenz-datenbank 10 abgelegt ist, beispielsweise mögliche Abfahrpunkte und deren Entfernung zur aktuellen Position.

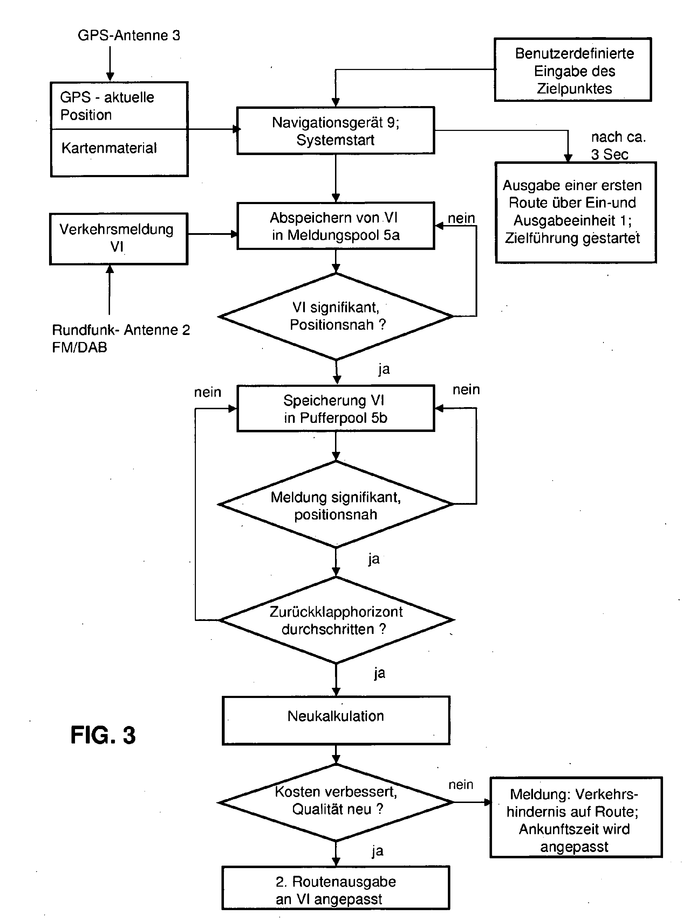

Aus Figur 3 ist im Vergleich zu Figur 2 zu entnehmen, dass nicht jede Route nach einer Neukalkulation dem Nutzer des Navigationsgerätes 9 angezeigt wird, sondern nur dann, wenn durch die Neukalkulation eine neue Qualität, wie beispielsweise eine Verbesserung der Reisezeit, erzielt wurde. Wird keine Verbesserung der Routeneigenschaften erreicht, wird der Nutzer des Navigationsgerätes 9 akustisch durch die Ein- und Ausgabeeinheit 1 darauf hingewiesen, dass sich auf der befahrenen Strecke ein Verkehrshindernis befindet und die Zeit zum Erreichen des Reisezieles geändert hat.

Wenn sich die Qualität der, durch den Routenkalkulator 8 berechneten Route unter Berücksichtigung von Verkehrsmeldungen verbessert, wird diese dem Nutzer des Navigationsgerätes 9 von der Ein- und Ausgabeeinheit 1 ausgegeben.

Im Hintergrund der Routenberechnung und Anpassung an aktuelle Verkehrshindernisse steuert der Datenmanager 6, nach Bestimmung des aktuellen Verkehrsaufkommens, die Empfangsmittel 4, wie beispielsweise den Tuner.

Besonders vorteilhaft stellt der Datenmanager 6 eine Steuerinformation für die Empfangsmittel 4 bereit, die beispielsweise bei starkem Verkehr, bei mehr als zwanzig empfangenen relevanten Verkehrsmeldungen, die Kapazität der Empfangsmittel 4 vornehmlich auf den Empfang von Verkehrsmeldungen ausrichtet. Dementsprechend wird die Priorität, den Empfang eines eingestellten Senders zu gewährleisten und die Pflege einer Liste mit empfangbaren Sendern bereitzustellen, zurückgestuft.

Das dient dazu, den Empfang der zahlreichen Verkehrsinformation, sowie eine zeitliche und inhaltliche Konsistenz relevanter Verkehrsmeldungen mit dem erfindungsgemäßen Navigationsgerät 9 zu gewährleisten.

Im Normalfall würden bei Verlust der Sendefrequenz eines eingestellten Senders, wie bei Durchfahrt durch einen Tunnel, die Empfangsmittel 4 versuchen, den Empfang des eingestellten Senders wieder herzustellen. Das ist bei der vorliegenden Erfindung nicht der Fall. Es werden vorteilhaft Mittel bereitgestellt, welche die Kapazität der Empfangsmittel 4 in Abhängigkeit vom aktuellen Verkehrsaufkommen auf den Empfang von Verkehrsmeldungen ausrichten.

## Patentansprüche

1. Satellitengestütztes Navigationsgerät (9) mit einer Vorrichtung zur Anpassung einer berechneten Route an aktuelle Verkehrsereignisse, bei dem das Navigationsgerät (9) einen Routenkalkulator (8), eine GPS-Antenne (3), ein Lage- und Positionsschätzmodul (7) zum Bestimmen der aktuellen Position, Empfangsmittel (4), die zum Empfangen von Hörfunksignalen und Verkehrsmeldungen sowie zum Bereitstellen und Aktualisieren einer Liste mit empfangbaren Sendern eingerichtet sind und Speichermittel (5) umfasst, welche Kartendaten, einen Meldungspool (5a) zur Aufnahme aller über Hörrundfunk empfangener Verkehrsmeldungen sowie einen Pufferpool (5b) zur Aufnahme von bewerteten, gefilterten Verkehrsmeldungen beinhalten, dadurch charakterisiert,
dass das Navigationsgerät (9) zusätzlich einen Datenmanager (6) beinhaltet, der in Abhängigkeit von einer Anzahl von empfangenen Verkehrsmeldungen
• eine Bestimmung von einem aktuellen Verkehrsaufkommen vornimmt,
• die empfangenen Verkehrsmeldungen gefiltert und bewertet von dem Meldungspool (5a) in den Pufferpool (5b) überträgt,
• die zeitlichen Abstände zwischen Aktualisierungen des Pufferpools (5b) anpasst und
• die Empfangsmittel (4) und den Routenkalkulator (8) steuert.

2. Satellitengestütites Navigationsgerät (9) nach Anspruch 1, bei dem der Datenmanager (6) die Bestimmung des aktuellen Verkehrsaufkommens während der Anpassung der berechneten Route an aktuelle Verkehrsereignisse mehrfach, in geräteintern festgelegten zeitlichen Abständen, vornimmt.

3. Satellitengestütztes Navigationsgerät (9) nach Anspruch 1, bei dem der Datenmanager (6) bei der Bestimmung des aktuellen Verkehrsaufkommens die empfangenen Verkehrsmefdungen zu Verkehrsereignissen berücksichtigt, die durch ihre Position für die berechnete Route relevant sind und welche
• bisher noch nicht empfangen wurden, somit neu sind,
• ein Verkehrsereignis betreffen, das bereits in den Speichermitteln (5) abgelegt ist, dessen Eigenschaften sich aber geändert haben, oder
• die den Wegfall eines bereits empfangenen Verkehrsereignisses betreffen.

4. Satellitengestütztes Navigationsgerät (9) nach Anspruch 1, bei dem der Datenmanager (6) die empfangenen Verkehrsmeldungen derart filtert, dass er bei einer steigenden Anzahl von empfangenen Verkehrsmeldungen von einem steigenden Verkehrsaufkommen ausgeht und die zeitlichen Abstände zwischen den Aktualisierungen des Pufferpools (5b) vergrößert.

5. Satellitengestütztes Navigationsgerät (9) nach Anspruch 1, bei dem der Datenmanager (6) zusätzlich die empfangenen Verkehrsmeldungen derart bewertet, dass er die vom Meldungspool (5a) in den Pufferpool (5b) zu übertragenen Verkehrsmeldungen abhängig von ihrer Position und ihrer Entfernung einem Nahbereich oder einem Fernbereich zum Navigationsgerät (9) zuordnet.

6. Satellitengestütztes Navigationsgerät (9) nach Anspruch 4, bei dem der Datenmanager (6) bei der Aktualisierung des Pufferpools (5b) zwischen dem Nahbereich und dem Fernbereich unterscheidet und die zeitlichen Abstände zwischen der Aktualisierung des Pufferpools (5b) entsprechend Nahbereich und Fernbereich anpasst.

7. Satellitengestütztes Navigationsgerät (9) nach Anspruch 5, wobei der zeitliche Abstand zwischen den Aktualisierungen des Pufferpools (5b) im Fernbereich des Navigationsgerätes (9) größer ist als im Nahbereich.

8. Satellitengestütztes Navigationsgerät (9) nach Anspruch 1, bei dem der Datenmanager (6) die zeitlichen Abstände zwischen den Aktualisierungen des Pufferpools (5b) zusätzlich derart anpasst, dass er berücksichtigt, ob die berechnete Route durch einen Bereich des Verkehrsnetzes führt, das generell durch eine hohe Anzahl von Verkehrsmeldungen charakterisiert ist.

9. Satellitengestütztes Navigationsgerät (9) nach Anspruch 1, bei dem der Datenmanager (6) den Routenkalkulator (8) derart steuert, dass dieser bei der Anpassung der Route an aktuelle Verkehrsereignisse in Abhängigkeit von der aktuellen Position und des in Kartendaten gespeicherten Verkehrsnetzes einen nächstmöglichen Abfahrpunkt vorausberechnet.

10. Satellitengestütztes Navigationsgerät (9) nach Anspruch 9, bei dem der Routenkalkulator (8) entsprechend einer relevanten Verkehrsmeldung die angepasste Route berechnet sowie eine Qualitätsänderung, die sich aus der für die Routen benötigten Fahrzeit oder dem benötigten Kraftstoffverbrauch ausdrückt und den Abfahrpunkt anhand des Verkehrsnetzes berücksichtigt, ab dem sich die beiden Routen voneinander unterscheiden.

11. Satellitengestütztes Navigationsgerät (9) nach Anspruch 10, bei dem der Routenkalkulator (8) die angepasste Route nur dann ausgibt, wenn sie im Vergleich zur aktuellen Route eine wesentliche Änderung der Qualität aufweist und er geprüft hat, ob bereits ein Routenwechsel stattgefunden hat.

12. Satellitengestütztes Navigationsgerät (9) nach Anspruch 1, bei dem der Datenmanager (6) bei Eingang einer Meldung zu einem relevanten Verkehrsereignis nur dann eine Routenanpassung auslöst, wenn er überprüft hat, ob vor Meldungseingang ein erfolgreicher Routenwechsel nach vorangegangener Anpassung der Route vollzogen und ein entsprechender Zurückklapphorizont durchschritten wurde.

13. Satellitengestütztes Navigationsgerät (9) nach Anspruch 1, bei dem der Datenmanager (6) nach Bestimmung der Höhe des aktuellen Verkehrsaufkommens die Empfangsmittel (4) derart steuert, dass bei steigendem Verkehrsaufkommen eine Kapazität der Empfangsmittel (4) vorwiegend auf den Empfang von Verkehrsmeldungen ausgerichtet wird

14. Verfahren zur Anpassung einer berechneten Route an aktuelle Verkehrsereignisse mit einem satellitengestützten Navigationsgerät (9), welches einen Routenkalkulator (8), eine GPS-Antenne (3) sowie ein Lage- und Positionsschätzmodul (7) zum Bestimmen der aktuellen Position, Empfangsmittel (4), die zum Empfangen von Hörfunksignalen und Verkehrsmeldungen sowie zum Bereitstellen und Aktualisieren einer Liste mit empfangbaren Sendern eingerichtet sind und Speichermittel (5) umfasst, welche Kartendaten, einen Meldungspool (5a) zur Aufnahme aller, über Hörrundfunk empfangener, Verkehrsmeldungen und einen Pufferpool (5b) zur Aufnahme für bewertete sowie gefilterte Verkehrsmeldungen beinhalten, dadurch charakterisiert, dass das Navigationsgerät (9) zusätzlich einen Datenmanager (6) enthält, der in Abhängigkeit von einer Anzahl von empfangenen Verkehrsmeldungen,
• eine Bestimmung eines aktuellen Verkehrsaufkommens vornimmt,
• die empfangenen Verkehrsmeldungen gefiltert und bewertet vom Meldungspool (5a) in den Pufferpool (5b) überträgt,
• die zeitlichen Abstände zwischen Aktualisierungen des Pufferpools (5b) anpasst und
• die Empfangsmittel (4) und den Routenkalkulator steuert.

15. Verfahren zur Anpassung einer berechneten Route nach Anspruch 14, bei dem der Datenmanager (6) die Bestimmung des aktuellen Verkehrsaufkommens anhand der Anzahl von Verkehrsmeldungen vornimmt, die für die berechnete Route relevant sind und welche vom Meldungspool (5a) in den Pufferpool (5b) übertragenen werden.

## Claims

1. Satellite-based navigation device (9) having an apparatus for adapting a calculated route to current traffic events, the navigation device (9) comprising a route calculator (8), a GPS antenna (3), a location and position estimation module (7) for determining the current position, reception means (4) configured for receiving radio signals and traffic messages as well as providing and updating a list of receivable broadcast stations, and storage means (5) which contain card data, a message pool (5a) for storing all traffic messages received via radio as well as a buffer pool (5b) for storing evaluated filtered traffic messages, **characterized in that**
the navigation device (9) additionally contains a data manager (6) which, dependent on a number of received traffic messages,
• performes a determination of a current traffic volume,
• transmits the filtered and evaluated received traffic messages from the message pool (5a) into the buffer pool (5b),
• adapts the time lags between updates of the buffer pool (5b), and
• controls the reception means (4) and the route calculator (8).

2. Satellite-based navigation device (9) according to claim 1
wherein during the adaptation of the calculated route to current traffic events the data manager (6) performs the determination of the current traffic volume several times, in time lags that were internally specified.

3. Satellite-based navigation device (9) according to claim 1
wherein on the determination of the current traffic volume the data manager (6) considers the received traffic messages for traffic events which are relevant for the calculated route due to their position and which
• were not received so far and hence are new,
• concern a traffic event that is already stored in the storage means (5), wherein however the properties of the traffic event have changed, or
• concern the discontinuation of a traffic event which was already received.

4. Satellite-based navigation device (9) according to claim 1
wherein the data manager (6) filters the received traffic messages in such a way that at a rising number of received traffic messages the data manager (6) presumes a rising traffic volume and enlarges the time laps between the updates of the buffer pool (5b).

5. Satellite-based navigation device (9) according to claim 1
wherein the data manager (6) additionally evaluates the received traffic messages in such a way that the data manager (6) assignes the traffic messages which need to be transferred from the message pool (5a) into the buffer pool (5b) to a near range or to a far range from the navigation device (9) dependent on their position and their distance.

6. Satellite-based navigation device (9) according to claim 4
wherein on the update of the buffer pool (5b) the data manager (6) differentiates between the near range and the far range and adapts the time lags between the update of the buffer pool (5b) according to near range and far range.

7. Satellite-based navigation device (9) according to claim 5
wherein the time lag between updates of the buffer pool (5b) in the far range of the navigation device (9) is bigger than the time lag between updates of the buffer pool (5b) in the near range of the navigation device (9).

8. Satellite-based navigation device (9) according to claim 1
wherein the data manager (6) adapts the time lags between the updates of the buffer pool (5b) additionally in such a way that the data manager (6) considers if the calculated route passes through an area of the transport network that is **characterized by** a large number of traffic messages generally.

9. Satellite-based navigation device (9) according to claim 1
wherein the data manager (6) controls the route calculator (8) in such a way that on the adaptation of the route to current traffic events the data manager (6) precalculates a next possible exit point subject to the current position and the transport network stored in card data.

10. Satellite-based navigation device (9) according to claim 9
wherein the route calculator (8) calculates the adapted route according to a relevant traffic message, as well as a quality change which expresses itself by the needed driving time for the routes or the needed fuel consumption and considers based on the transport network the exit point from which both routes differ.

11. Satellite-based navigation device (9) according to claim 10
wherein the route calculator (8) outputs the adapted route only if the adapted route comprises a substantial change of the quality compared to the current route and the route calculator (8) has checked if a route change already took place.

12. Satellite-based navigation device (9) according to claim 1
wherein the data manager (6) on arrival of a message regarding a relevant traffic event triggers a route adaption only if the data manager (6) has checked if prior to arrival of a message a successful route change after preceding adaptation of the route was performed and an appropriate foldback horizon was stridden through.

13. Satellite-based navigation device (9) according to claim 1
wherein after determination of the level of the current traffic volume the data manager (6) controls the reception means (4) in such a way that at a rising traffic volume a capacity of the reception means (4) is mainly concentrated on the reception of traffic messages.

14. Method for adapting a calculated route to current traffic events using a satellite-based navigation device (9) which comprises a route calculator (8), a GPS antenna (3) as well as a location and position estimation module (7) for determining the current position, reception means (4) configured for receiving radio signals and traffic messages as well as providing and updating a list of receivable broadcast stations, and storage means (5) which contain card data, a message pool (5a) for storing all traffic messages received via radio and a buffer pool (5b) for storing evaluated as well as filtered traffic messages, **characterized in that**
the navigation device (9) additionally comprises a data manager (6) which, dependent on a number of received traffic messages,
• performs a determination of a current traffic volume,
• transmits the filtered and evaluated received traffic messages from the message pool (5a) into the buffer pool (5b),
• adapts the time lags between updates of the buffer pool (5b), and
• controls the reception means (4) and the route calculator.

15. Method for adapting a calculated route according to claim 14
wherein the data manager (6) performs the determination of the current traffic volume based on the number of traffic messages that are relevant for the calculated route and which are transmitted from the message pool (5a) into the buffer pool (5b).

## Revendications

1. Appareil de navigation assisté par satellite (9) équipé d'un dispositif pour adapter un itinéraire calculé aux événements actuels du trafic, l'appareil de navigation (9) comprenant un calculateur d'itinéraire (8), une antenne GPS (3), un module d'estimation de la position (7) servant à déterminer la position actuelle, des moyens de réception (4) configurés pour la réception de signaux de radiodiffusion et de messages d'information trafic et pour la mise à disposition et la mise à jour d'une liste d'émetteurs pouvant être reçus, ainsi que des moyens de stockage (5) contenant des données cartographiques, un groupe de messages (5a) servant à enregistrer tous les messages d'information trafic reçus par radiodiffusion ainsi qu'un groupe tampon (5b) servant à enregistrer des messages d'information trafic exploités et filtrés, **caractérisé en ce que**
l'appareil de navigation (9) intègre en plus un gestionnaire de données (6) qui, en fonction du nombre de messages d'information trafic reçus,
• détermine le volume actuel du trafic,
• transfère les messages d'information trafic reçus, filtrés et exploités, du groupe de messages (5a) dans le groupe tampon (5b),
• adapte les intervalles de temps entre les mises à jour du groupe tampon (5b) et
• assure la commande des moyens de réception (4) et du calculateur d'itinéraire (8).

2. Appareil de navigation assisté par satellite (9) selon la revendication 1, **caractérisé en ce que** le gestionnaire de données (6) détermine à plusieurs reprises, à des intervalles de temps définis dans l'appareil, le volume actuel du trafic pendant que l'itinéraire calculé est adapté aux événements actuels du trafic.

3. Appareil de navigation assisté par satellite (9) selon la revendication 1, **caractérisé en ce que** le gestionnaire de données (6) détermine le volume actuel du trafic en tenant compte des messages d'information trafic reçus au sujet d'événements du trafic qui ont un impact sur l'itinéraire calculé en raison de leur position, et qui
• n'ont pas encore été reçus auparavant et sont donc nouveaux,
• concernent un événement du trafic qui a déjà été enregistré par les moyens de stockage (5), mais dont les propriétés ont changé, ou
• concernent la disparition d'un événement du trafic ayant déjà été reçu.

4. Appareil de navigation assisté par satellite (9) selon la revendication 1, **caractérisé en ce que** le gestionnaire de données (6) filtre les messages d'information trafic reçus de telle sorte qu'il interprète une augmentation du nombre de messages d'information trafic reçus comme une augmentation du volume du trafic et augmente les intervalles de temps entre les mises à jour du groupe tampon (5b).

5. Appareil de navigation assisté par satellite (9) selon la revendication 1, **caractérisé en ce que** le gestionnaire de données (6) exploite en plus les messages d'information trafic reçus de telle sorte qu'il attribue les messages d'information trafic, à transférer du groupe de messages (5a) dans le groupe tampon (5b), à une zone de proximité ou à une zone distante de l'appareil de navigation (9) en fonction de leur position et de leur distance.

6. Appareil de navigation assisté par satellite (9) selon la revendication 4, **caractérisé en ce que** le gestionnaire de données (6) fait une distinction entre la zone de proximité et la zone distante pour la mise à jour du groupe tampon (5b) et adapte l'intervalle des mises à jour du groupe tampon (5b) en fonction de la zone de proximité et de la zone distante.

7. Appareil de navigation assisté par satellite (9) selon la revendication 5, **caractérisé en ce que** l'intervalle des mises à jour du groupe tampon (5b) est plus grand dans la zone distante de l'appareil de navigation (9) que dans la zone de proximité.

8. Appareil de navigation assisté par satellite (9) selon la revendication 1, **caractérisé en ce que** le gestionnaire de données (6) adapte en plus les intervalles de temps entre les mises à jour du groupe tampon (5b) en fonction du parcours de l'itinéraire calculé, si celui-ci traverse une zone du réseau, qui est généralement **caractérisée par** un nombre élevé de messages d'information trafic.

9. Appareil de navigation assisté par satellite (9) selon la revendication 1, **caractérisé en ce que** le gestionnaire de données (6) commande le calculateur d'itinéraire (8) de telle sorte que celui-ci calcule à l'avance le point de départ le plus proche possible en fonction de la position actuelle et du réseau enregistré dans les données cartographiques pour adapter l'itinéraire à des événements actuels du trafic.

10. Appareil de navigation assisté par satellite (9) selon la revendication 9, **caractérisé en ce que** le calculateur d'itinéraire (8) calcule l'itinéraire adapté en fonction d'un message d'information trafic pertinent, ainsi que le changement de qualité qui résulte du temps nécessaire à parcourir les itinéraires ou de la consommation de carburant nécessaire, et qui tient compte, en fonction du réseau, du point de départ à partir duquel les deux itinéraires diffèrent.

11. Appareil de navigation assisté par satellite (9) selon la revendication 10, **caractérisé en ce que** le calculateur d'itinéraire (8) ne communique l'itinéraire adapté que si celui-ci présente un changement notable de la qualité par rapport à l'itinéraire actuel et s'il a vérifié si un changement d'itinéraire a déjà eu lieu.

12. Appareil de navigation assisté par satellite (9) selon la revendication 1, **caractérisé en ce que** le gestionnaire de données (6) ne déclenche une adaptation de l'itinéraire après la réception d'un message concernant un événement pertinent du trafic que s'il a vérifié si, avant la réception du message, un changement d'itinéraire réussi a été effectué après adaptation préalable de l'itinéraire et si un horizon de repli correspondant a été franchi.

13. Appareil de navigation assisté par satellite (9) selon la revendication 1, **caractérisé en ce que** le gestionnaire de données (6), après la détermination du volume actuel du trafic, commande les moyens de réception (4) de telle sorte qu'en cas d'augmentation du volume du trafic, une capacité des moyens de réception (4) est principalement dédiée à la réception des messages d'information trafic.

14. Procédé permettant d'adapter un itinéraire calculé aux événements actuels du trafic avec un appareil de navigation assisté par satellite (9) comprenant un calculateur d'itinéraire (8), une antenne GPS (3), un module d'estimation de la position (7) servant à déterminer la position actuelle, des moyens de réception (4) configurés pour la réception de signaux de radiodiffusion et de messages d'information trafic et pour la mise à disposition et la mise à jour d'une liste d'émetteurs pouvant être reçus, ainsi que des moyens de stockage (5) contenant des données cartographiques, un groupe de messages (5a) servant à enregistrer tous les messages d'information trafic reçus par radiodiffusion ainsi qu'un groupe tampon (5b) servant à enregistrer des messages d'information trafic exploités et filtrés, **caractérisé en ce que**
l'appareil de navigation (9) intègre en plus un gestionnaire de données (6) qui, en fonction du nombre de messages d'information trafic reçus,
• détermine le volume actuel du trafic,
• transfère les messages d'information trafic reçus, filtrés et exploités, du groupe de messages (5a) dans le groupe tampon (5b),
• adapte les intervalles de temps entre les mises à jour du groupe tampon (5b) et
• assure la commande des moyens de réception (4) et du calculateur d'itinéraire.

15. Procédé permettant d'adapter un itinéraire calculé selon la revendication 14, **caractérisé en ce que** le gestionnaire de données (6) détermine le volume actuel du trafic en fonction du nombre de messages d'information trafic qui ont un impact sur l'itinéraire calculé et qui sont transférés du groupe de messages (5a) dans le groupe tampon (5b).
